# EUROPEAN PATENT APPLICATION

(11) **EP 4 825 172 A1**
(43) Date of publication of application: **21.10.2026**
(21) Application number: 25171034.9
(22) Date of filing: 16.04.2025
(51) Int. Cl.: A01N 37/46, A01P 21/00, C05F 11/10

(54) **USE OF EDP PEPTIDE, OR A SALT THEREOF, AS A BIOSTIMULANT**

(71) Applicant: Capsa Ellen GmbH, 7000 Chur (CH)
(72) Inventor: DUDKOV, Alexander, 1204 Geneva (CH); HUBER, Daniel, 1248 Hermance (CH)
(74) Representative: Santarelli

(57) **Abstract**

The invention describes the use of EDP peptide, or a salt thereof, as a biostimulant, a composition comprising EDP peptide, or a salt thereof and a process for stimulating a plant from the order Fabales.

## Description

### Field of Invention

The present invention relates to the use of an ultrashort peptide as a biostimulant for the cultivation of a plant, such as a plant from the order Fabales.

### Background to the invention

This invention pertains to the use of an ultrashort peptide to stimulate plant growth. With the increasing global population and mounting environmental challenges such as climate change (temperature fluctuations, drought, floods, etc.), soil degradation (presence of toxic heavy metals, deficiency of essential nutrients, etc.) and the reduction in permitted chemical inputs, it has become imperative to develop innovative solutions that improve agricultural yields while preserving ecosystems. In particular, it is necessary to be able to improve yields of plants belonging to the order Fabales, which include major food crops that are an essential source of protein and nutrients for billions of people. By "food crops", it is intended to mean a type of agricultural crop that is specifically cultivated for human consumption (e.g. legumes, such as beans, peas, lentils, soybean, etc.).

Ultrashort peptides, as natural or synthetic molecules, are protein fragments that perform specific biological functions. Their action can appear not only as signalling objects but also as participating in biological processes in plant cultivation.

Ultrashort peptides have numerous advantages compared to their larger counterparts. In particular, it's worth highlighting their economical synthesis both on small and large scales, wide chemical diversity, ease of modification, high biological activity, absorbability, availability, customizable functionalization, high selectivity and specificity, biodegradability and biocompatibility, high safety, low toxicity or low immunogenicity.

The invention described herein introduces the use of EDP peptide, or a salt thereof, as a biostimulant, a composition comprising EDP peptide, or a salt thereof, and a process for stimulating a plant. In particular, the invention determines the influence of EDP peptide on seed sowing qualities and growth indicators at the initial stages of ontogenesis in the cultivation of plants from the order Fabales.

The invention relates to the use of a peptide consisting of the amino acid sequence EDP, or a salt thereof, as a biostimulant.
More specifically, the peptide is an ultrashort peptide, *i.e.* a peptide consisting of very short chains of amino acids, usually between 2 to 7 residues in length. In the present application, unless otherwise indicated, all ranges of values used are to be understood as including the limits.

According to a more preferred embodiment, the peptide according to the invention is a tripeptide, wherein the amino acid sequence is written from N-terminus to C-terminus, *i.e.* of the formula H-Glu-Asp-Pro-OH.

Preferably, the peptide comprises L-amino acids, preferably consists of L-amino acids. Thus, EDP peptide is a tripeptide L-Glu-L-Asp-L-Pro. More preferably, the peptide according to the invention is a tripeptide having an amino acid sequence of EDP, wherein the amino acids are L-amino acids, and wherein the amino acid sequence is written from N-terminus to C-terminus.

The tripeptide may be used as a free peptide or in the form of a water soluble salt, such as a sodium, potassium, ammonium or zinc salt. Preferably, the EDP peptide, or a salt thereof, is an isolated peptide. Advantageously, the EDP peptide is a synthetic peptide, and also referred to as Crystagen.

Preferably, EDP peptide, or a salt thereof, is used at an "effective dose", *i.e.* at a quantity of EDP peptide, or a salt thereof sufficient to trigger the biostimulant effect of the peptide.

By "biostimulant", it is intended to mean any product or composition that improves one or more of the following natural processes in a plant or their rhizosphere: growth and/or immune responses and/or productivity and/or resilience to stress (i.e. drought, salinity or extreme temperatures), in comparison to natural processes that would occur in the absence of a biostimulant. A biostimulant is to be distinguished from biofertilizers, which supply nutrients to the plant and/or improve soil organic matter.

By "growth", it is intended to mean the process by which a plant increases in size, mass, and complexity over time. More specifically, the growth of a plant encompasses one or more of the following stages: germination (i.e. activation of the seed and emergence of a sprout) and/or vegetative growth (i.e. development of leaves, stems and roots) and/or reproductive growth (i.e. formation of flowers, fruit and seeds) and/or maturation and senescence (i.e. completion of the growth cycle and eventual aging).

By "productivity", it is intended to mean the capacity of a plant to selectively produce biomass or yields (grain, fruit, fiber, etc.) over a given period.

By "plant", it is intended to mean any part of a plant at any stage of its development. In a non-limitative way, the word "plant" includes any of the following elements: seed, root, stem, leaf, flower, fruit, node and internode, bud, and/or at any stages of development of a plant: sprout, seedling, juvenile plant and mature plant.

By "sprout", it is intended to mean the initial organism emerging from the seed after it begins to germinate. A sprout usually consists of an embryonic radicle (*i.e.* the first root that emerges from the seed, anchoring the plant and absorbing water and nutrients) and/or an hypocotyl (*i.e.* the stem-like structure that connects the root to the developing leaves) and/or cotyledons (*i.e.* the initial leaves, which often store nutrients to support early growth).

By "seedling", it is intended to mean a young plant that has grown past the sprout stage, and that is capable of photosynthesis.

By "juvenile plant", it is intended to mean a plant that has grown beyond the seedling stage but has not yet reached maturity. It is in an intermediate stage of development characterized by active growth but lacks the ability to reproduce (e.g., produce flowers, fruits, or seeds).

By "mature plant" it is intended to mean a plant that is a fully developed, and has completed its vegetative growth and has entered the reproductive phase of its life cycle. At this stage, the plant is capable of producing flowers, fruits, and seeds, which are essential for reproduction and propagation.

EDP peptide, or a salt thereof, is used as a biostimulant, such as an activator of growth of the plant.

More specifically, EDP peptide, or a salt thereof, is used as a root stimulant.

By "root stimulant", it is intended to mean a biostimulant that improves root growth in a plant (*i.e.* the root development in length, weight, thickness and complexity), in comparison to natural processes that would occur in the absence of a root stimulant.

By "root", it is intended to mean the part of a plant conveying water and nourishment to the rest of the plant. The roots can be organized into two distinct systems, *i.e.* either a taproot system or a fibrous root system. Both root systems are composed of primary and secondary (or lateral) roots. Roots can also arise from non-root tissues, such as the base of the stem or nodes, instead of growing from the embryonic radicle. Said roots are called "adventitious roots".

By "primary roots", it is intended to mean the early roots that are formed from the embryonic radicle after germination.

By "secondary (or lateral) roots", it is intended to mean roots that develop from the pericycle of the primary root and grow laterally (horizontally or obliquely) outward.

In a taproot system, the primary root is a taproot.

By "taproot", it is intended to mean the main, central root of a plant's root system that grows vertically downward and becomes the dominant root in a plant with a taproot system. The taproot often grows deep into the soil.

In a taproot system, secondary roots are lateral roots that branch out from the taproot, and typically grow horizontally or diagonally. The taproot system is common in dicotyledonous plants, such as carrots, radishes, beets, dandelions, turnips, etc.

In a fibrous root system, a network of thin, branching roots spread out in all directions. It typically lacks a central, dominant root (like a taproot) and instead consists of many roots that are similar in size. The primary root, which initially develops from the embryonic radicle, is short-lived and stops growing early. It is replaced by a cluster of secondary roots of approximately equal size that arise from the base of the stem. These secondary roots form the characteristic fibrous root system.

The fibrous root system is common in monocotyledonous plants such as grasses, wheat, rice, and corn.

Advantageously, EDP peptide, or a salt thereof, improves the growth, in particular the weight and length, of the roots of the plant at any stage of growth.

By "improve the growth of the roots of a plant", it is intended to mean at least increasing the length of the roots of said plant.

Advantageously, EDP peptide, or a salt thereof, increases the root length by 5%, more advantageously by 10%, even more advantageously by 20% compared with an untreated seed.

More specifically, EDP peptide, or a salt thereof, is used to improve the growth of the primary roots.

Advantageously, EDP peptide, or a salt thereof, increases the primary root length by 5%, more advantageously by 10%, even more advantageously by 20% compared with an untreated seed.

Advantageously, EDP peptide, or a salt thereof, promotes the emergence of adventitious roots.

By "promotes the emergence of roots", it is intended to mean that the peptide increases the number of emerging roots and/or the speed of root emergence.

Advantageously, EDP peptide, or a salt thereof, promotes the emergence of adventitious roots from a treated plant by 10%, more advantageously by 20%, compared with an untreated plant.

Advantageously, EDP peptide, or a salt thereof, increases the adventitious roots length by 5%, more advantageously by 10%, even more advantageously by 20% compared with an untreated seed.

Alternatively, EDP peptide, or a salt thereof, is used a shoot system stimulant.

By "shoot system stimulant", it is intended to mean a biostimulant that improves shoot system growth in a plant (*i.e.* the shoot system development in length, weight, thickness and complexity), in comparison to natural processes that would occur in the absence of a shoot system stimulant.

By "shoot system", it is intended to mean the part of a plant that are not roots. The shoot system is responsible for several key functions, including photosynthesis, reproduction, and support. It includes the following components: the stem, leaf, flower, fruit and bud. Together, these parts enable the plant to grow, reproduce, and adapt to its environment.

Advantageously, EDP peptide, or a salt thereof, increases the shoot system length by 5%, more advantageously by 20%, even more advantageously by 35% compared with an untreated seed.

Advantageously, EDP peptide, or a salt thereof, increases the shoot system dry weight by 10%, more advantageously by 15%, even more advantageously by 30% compared with an untreated seed.

Advantageously, EDP peptide, or a salt thereof, increases the shoot crude weight by 3%, more advantageously by 7%, even more advantageously by 10% compared with an untreated seed.

Advantageously, EDP peptide, or a salt thereof, is used to treat a plant from the order Fabales.

Fabales are an order of dicotyledonous plants that includes four families, *i.e.* Fabaceae, Polygalaceae, Quillajaceae, Surianaceae, the best known of which is the Fabaceae. This order is of considerable ecological, economic and dietary importance.

Advantageously, EDP peptide, or a salt thereof, is used to treat a plant from any of the four families of the order Fabales, *i.e.* Fabaceae, Polygalaceae, Quillajaceae, Surianaceae.

In particular, EDP peptide, or a salt thereof, is used to treat a plant from the family Fabaceae.

More particularly, EDP peptide, or a salt thereof, is used to treat a plant from any of the subfamilies of the family Fabaceae, *i.e.* Caesalpinioideae, Cercidoideae, Detarioideae, Dialioideae, Duparquetioideae, Faboideae.

Advantageously, EDP peptide, or a salt thereof, is used to treat a plant from the subfamily Faboideae.

More specifically, EDP peptide, or a salt thereof, is used to treat a plant from any tribes of the subfamily Faboideae, *i.e.* Abreae, Amorpheae, Bossiaeeae, Brongniartieae, Cicereae, Crotalarieae, Dalbergieae, Desmodieae, Dipterygeae, Euchresteae, Fabeae, Galegeae, Genisteae, Hedysareae, Hypocalypteae, Indigofereae, Loteae, Millettieae, Mirbelieae, Phaseoleae, Podalyrieae, Psoraleeae, Robinieae, Sesbanieae, Sophoreae, Swartzieae, Thermopsideae, Trifolieae, Wisterieae.

Even more specifically, EDP peptide, or a salt thereof, is used to treat a plant from the tribe Genisteae.

More advantageously, EDP peptide, or a salt thereof, is be used to treat a plant from any of the genera in the tribe Genisteae, *i.e. Adenocarpus, Anarthrophyllum, Argyrocytisus, Argyrolobium, Calicotome, Chamaecytisus, Cytisophyllum, Cytisus, Dichilus, Echinospartum, Erinacea, Genista, Gonocytisus, Hesperolaburnum, Laburnocytisus, Laburnum, Lembotropis, Lupinus, Melolobium, Petteria, Podocytisus, Polhillia, Retama, Sellocharis, Spartium, Stauracanthus, Ulex.*

In the most advantageous way, EDP peptide, or a salt thereof, is used to treat a plant from the genus Lupinus.

More specifically, EDP peptide, or a salt thereof, is used to treat any part of a plant from the order Fabales at any stage of its development. In a non-limitative way, EDP peptide, or a salt thereof, is used to treat any of the following parts of a plant: seeds, roots, stems, leaves, flowers, fruits, nodes and internodes, buds.

In particular, EDP peptide, or a salt thereof, is used to treat any part of the seedling of a plant from the order Fabales. Alternatively, EDP peptide, or a salt thereof, is used to treat any part of a juvenile plant from the order Fabales. Alternatively, EDP peptide, or a salt thereof, is used to treat any part of a mature plant from the order Fabales.

As mentioned above, EDP peptide, or a salt thereof, is used as a root stimulant and/or a shoot system stimulant.

In particular, EPD peptide, or a salt thereof, is used to improve root growth in a plant of the order of Fabales, preferably a plant from the family Fabaceae, still preferably a plant from the tribe Genisteae, still more preferably a plant from the genus Lupinus, in particular, Lupinus albus, Lupinus polyphyllus, Lupinus luteus and Lupinus angustifolius, preferably *Lupinus albus.*

Advantageously, EDP peptide, or a salt thereof, increases the root length weight of a plant of the order Fabales by 5%, more advantageously by 10%, even more advantageously by 20% compared with an untreated seed.

More specifically, EDP peptide, or a salt thereof, is used to improve the growth of the primary roots of a plant of the order Fabales.

Advantageously, EDP peptide, or a salt thereof, increases the primary root length of a plant of the order Fabales by 5%, more advantageously by 10%, even more advantageously by 20% compared with an untreated seed.

Advantageously, EDP peptide, or a salt thereof, promotes the emergence of adventitious roots of a plant of the order Fabales.

Advantageously, EDP peptide, or a salt thereof, promotes the emergence of adventitious roots of a plant of the order Fabales from a treated plant by 10%, more advantageously by 20% compared with an untreated plant.

Advantageously, EDP peptide, or a salt thereof, increases the adventitious roots length of a plant of the order Fabales by 5%, more advantageously by 10%, even more advantageously by 20% compared with an untreated seed.

Advantageously, EDP peptide, or a salt thereof, increases the shoot system length of a plant of the order Fabales by 5%, more advantageously by 20%, even more advantageously by 35% compared with an untreated seed.

Advantageously, EDP peptide, or a salt thereof, increases the shoot system dry weight of a plant of the order Fabales by 10%, more advantageously by 15%, even more advantageously by 30% compared with an untreated seed.

Advantageously, EDP peptide, or a salt thereof, increases the shoot crude weight of a plant of the order Fabales by 3%, more advantageously by 7%, even more advantageously by 10% compared with an untreated seed.

More specifically, EDP peptide, or a salt thereof, is used to treat any part of a plant, such as from the order Fabales, at any stage of its development. In a non-limitative way, EDP peptide, or a salt thereof, is used to treat any of the following parts of a plant: seed, root, stems, leave, flower, fruit, node and internode, bud.

EDP peptide, or a salt thereof, can be used to treat seed.

By "seed", it is intended to mean the unit of reproduction of a plant, capable of developing into another such plant.

More particularly, EDP peptide, or a salt thereof, is used to treat seed and improves the growth of the embryonic radicle.

By "embryonic radicle", it is intended to mean the first root that emerges from the seed during germination. It is part of the seed's embryo.

Advantageously, EDP peptide, or a salt thereof, increases the embryonic radicle weight from a treated seed by 40%, more advantageously by 50%, even more advantageously by 60% compared with an untreated seed.

Advantageously, EDP peptide, or a salt thereof, increases the embryonic radicle length from a treated seed by 5%, more advantageously by 10%, even more advantageously by 20% compared with an untreated seed.

In particular, EPD peptide, or a salt thereof, is used to treat seed of a plant of the order of Fabales, preferably a plant from the family Fabaceae, still preferably a plant from the tribe Genisteae, still more preferably a plant from the genus Lupinus, even more preferably *Lupinus albus.*

Advantageously, EDP peptide, or a salt thereof, increases the embryonic radicle weight from a treated seed of a plant of the order of Fabales by 40%, more advantageously by 50%, even more advantageously by 60% compared with an untreated seed.

Advantageously, EDP peptide, or a salt thereof, increases the embryonic radicle length from a treated seed of a plant of the order of Fabales by 5%, more advantageously by 10%, even more advantageously by 20% compared with an untreated seed.

EDP peptide, or a salt thereof, can also be used to treat roots of the plant.

Preferably, EDP peptide, or a salt thereof, is used to treat roots of the plant by ground spreading.

By "ground spreading", it is intended to mean applying products directly to the soil surface around the plant. After being ground spread, the products are absorbed by the soil and diffuse through the soil until they are up taken by plant roots.

Advantageously, EDP peptide, or a salt thereof, is in liquid form and can be ground spread using a sprayer, atomizer, drip irrigation system or any other device capable of enabling soil treatment using a liquid product.

Alternatively, EDP peptide, or a salt thereof, is in solid form and can be ground spread using a spreader or any other device capable of enabling soil treatment using a solid product (e.g. granules, microgranules, wettable powders, dry powders, tablets or briquettes, etc.).

EDP peptide, or a salt thereof, can also be used to treat the shoot system of the plant.

By "treat the shoot system", it is intended to mean applying products directly to the above-ground parts of the plant, *i.e.* the shoot system of the plant, which include the stems, branches, leaves, flowers, and buds.

Advantageously, EDP peptide, or a salt thereof, can be applied to the soil using a sprayer, atomizer, drip irrigation system or any other device capable of enabling soil treatment using a liquid product.

Preferably, EDP peptide, or a salt thereof, is used to treat the shoot system of the plant by spraying.

Alternatively, EDP peptide, or a salt thereof, can be applied to the soil using a spreader or any other device capable of enabling soil treatment using a solid product (e.g. granules, microgranules, wettable powders, dry powders, tablets or briquettes, etc.).

Preferably, EDP peptide, or a salt thereof, is in the form of a powder.

Preferably, EDP peptide, or a salt thereof, is formulated in the form of granules, microgranules, wettable powders, dry powders, tablets or briquettes, preferably a wettable powder.

Alternatively, EDP peptide, or a salt thereof, is in the form of a liquid solution.

By "liquid solution", it is intended to mean that the solution is in liquid form at ambient temperature under normal conditions of atmospheric pressure. Advantageously, the liquid solution can be an aqueous solution, an oil or an emulsion. Preferably, the liquid solution is an aqueous solution.

More specifically, EDP peptide, or a salt thereof, may be an aqueous solution formulated by dissolving EDP peptide in the form of a powder into water (such as sterile water or tap water) while stirring.

Preferably, EDP peptide, or a salt thereof, is formulated as an aqueous solution at a concentration comprised between 10⁻²⁰ and 0.01 g/L. More preferably, EDP peptide, or a salt thereof, is formulated as an aqueous solution at a concentration comprised between 10⁻¹⁵ to 10⁻⁶ g/L. Even more preferably, EDP peptide, or a salt thereof, is formulated as an aqueous solution at a concentration comprised between 10⁻¹⁵ to 10⁻¹⁰ g/L.

The invention also concerns a method for stimulating a plant by bringing into contact said plant with a peptide consisting of EDP peptide, or a salt thereof.

By "stimulating a plant", it is intended to mean improving one or more of the following natural processes in said plant or its rhizosphere: growth and/or immune responses and/or productivity and/or resilience to stress (*i.e.* drought, salinity or extreme temperatures), in comparison to natural processes that would occur in the absence of stimulation.

In said method, the biostimulant (administration, etc.), the plant and the peptide are as described above, including preferential features and embodiments.

The invention also relates to a composition comprising EDP peptide, or a salt thereof, and a plant protection product.

By "plant protection product", it is intended to mean any substance or mixture of substances used to protect a plant or a plant product from harmful organisms or diseases. These products help prevent or control pests (such as insects, fungi, and weeds), as well as plant diseases, thus ensuring the health and productivity of crops. In a non-limitative way, "plant protection products" includes insecticides, fungicides, herbicides, bactericides, biocides.

Such plant protection product can be a chemical pesticide (e.g. pyrethroids, carbamates, organophosphates, neonicotinoids, sulfur, copper compounds, triazoles, chlorothalonil, mancozeb, glyphosate, 2,4-D, atrazine, etc.), or a natural pesticide (e.g. neem oil, etc.).

The composition can be in the form of a solid or a liquid.

Preferably, the composition further comprises an adjuvant, additive and/or active ingredient, such as:
- Fertilizers (e.g. micronutrients, phosphates, phosphoric acid, nitrates salts, potassium 35 salts, ammonium salts, urea etc.);
- Adjuvants and fillers useful in agronomy (e.g. non-ionic surfactants, stickers and spreaders, wetting agents, adhesives, penetrants, dispersants, acidifiers, and crop oils);
- Other additives (e.g. diatomaceous earth, etc.);
- Chelating agents (e.g. EDTA, citric acid, etc.);
- Solvents and solubilizers (e.g. water, ethanol or isopropanol, propylene glycol, etc.).

The invention further relates to a process for stimulating a plant, comprising the following steps:
a. treating said plant with EDP peptide, or a salt thereof,
b. cultivating said plant.

A "plant", "order Fabales" and "EDP peptide, or a salt thereof" are as described above, including the preferred and advantageous features and embodiments.

In the processes according to the invention, the use of EDP peptide, or a salt thereof, is advantageously, as described above, including the preferred and advantageous features and embodiments.

By "treating", it is intended to mean any of the following methods of treating a plant: spreading, spraying (soil or foliar spraying), fertilizing irrigation, seed coating or soaking, soil application, soil injection, controlled diffusion (granules or capsules), aerial application, encapsulation, or biocarriers.

By "cultivating", it is intended to mean any process of promoting growth and development of a plant. Growing a plant generally involves cultivating the plant in a medium or substrate suitable for growth and development. Typical methods of growing a plant include, but are not limited to, cultivation in pots or containers, cultivation in the ground, hydroponics, aquaponics, soilless cultivation on an artificial substrate, cultivation by vegetative propagation (cuttings).

By "substrate suitable for growth and development", it is intended to mean a solid substrate, such as moist filter papers, soil, sand, decaying organic matter, substrates for growing microgreens (vermiculite, coconut peat, mineral wool, soil mixture, mats, etc.) or substrates for growing microgreens in vitro, on which plants anchor themselves to grow, live and/or from which they derive nutrients.

By "medium suitable for growth and development", it is intended to mean liquid medium, such as water, water enriched in essential nutrients (nitrogen, phosphorus, potassium, iron, zinc and magnesium), that does not allow plant anchoring, but contributes to the nutritional supply of the plants.

Preferably, the process according to the invention is for stimulating roots of the plant and/or for stimulating the shoot system of the plant.

Preferably, the treatment in step a. is carried out on a plant from the order Fabales. Order Fabales" is as described above, including the preferred and advantageous features and embodiments.

Preferably, in that case, the treatment in step a. is carried out on a plant of the order of Fabales, preferably a plant from the family Fabaceae, still preferably a plant from the tribe Genisteae, still more preferably a plant from the genus Lupinus, such as *Lupinus albus.*

Preferably, the treatment in step a. is carried out on a seed.

Preferably, in that case, the treatment in step a. is carried out on a seed of the order of Fabales, preferably a seed from the family Fabaceae, still preferably a seed from the tribe Genisteae, still more preferably a seed from the genus Lupinus, such as *Lupinus albus.*

Any of the following methods can be used to carry out the seed treatment: seed dressing, seed coating, seed pelleting, seed dusting, seed soaking, spreading, spraying, watering, fertilizing irrigation or any other seed applications.

The seed treatment aims at optimizing the health, the growth and the productivity of the a plant by improving its development conditions and nutritional values.

The treatment in step a. can comprise a step of soaking the seed in a solution comprising EDP peptide, or a salt thereof.

By "soaking", it is intended to mean the complete submersion of a seed in a liquid formulation of EDP peptide, or a salt thereof, so that it is surrounded by the liquid on all sides.

Alternatively, the treatment in step a. comprises a step of applying EDP peptide, or a salt thereof, to the soil.

By "applying EDP peptide, or a salt thereof, to the soil", it is intended to mean any of the following methods of treating the soil: spreading, spraying, wattering, fertilizing irrigation, or any other soil applications, soil injection.

The soil on which the EDP peptide, or a salt thereof, is applied, is the soil around the plant.

Advantageously, the treatment in step a of the process according to the invention comprises a step of soaking the seed in a solution comprising EDP peptide, or a salt thereof followed by a step of applying EDP peptide, or a salt thereof, to the soil.

Advantageously, the treatment in step a. comprises a step of applying EDP peptide, or a salt thereof, on the shoot system of the plant.

By "applying EDP peptide, or a salt thereof, on the shoot system of the plant", it is intended to mean foliar spraying or any other methods suitable for treating the shoots of a plant.

### Example:

### 1. Protocol

### 1.1. Step 1: Seed soaking

Seeds from blue lupine (*Lupinus angustifolius L.),* Ladny variety were treated by soaking in different solutions containing either distilled H₂O alone (control condition), or EDP peptide in distilled H₂O, at various concentrations (*i.e.* 1x10⁻⁹, 1x10⁻¹⁰, 1x10⁻¹¹, 1x10⁻¹², 1x10⁻¹³ and 1x10⁻¹⁵ g/L) (experimental conditions). 20 seeds were tested for each condition. The seeds were soaked for 1 hour. The experiment was repeated 4 times.

### 1.2. Step 2: Germination capacity

After soaking, the seeds were germinated on filter paper in 95mm diameter Petri dishes in a germination medium of the same type as the soaking medium in which the seeds were pretreated, *i.e.* either distilled H₂O alone (control condition), or EDP peptide in distilled H₂O, at various concentrations (*i.e.* 1x10⁻⁹, 1x10⁻¹⁰, 1x10⁻¹¹, 1x10⁻¹², 1x10⁻¹³ and 1x10⁻¹⁵ g/L) (experimental conditions). The Petri dishes containing the seeds were placed in a growth chamber for constant conditions with program control (Binder KBW 720) at a temperature of 21°C and a constant humidity of 60%. Seeds were watered daily with tap water for 7 days.

### 1.3. Step 3: Analysis

The number of the germinated seeds was counted on the 3^{rd} and 7^{th} day. Germinated seeds were considered those that had normally developed a sprout. The embryonic radicle had to be not shorter than the seed itself and the shoot system not shorter than half a seed.

At the end of the experiment, the dry and crude weight of the sprouts and the average length of the shoot system and embryonic radicle, respectively, were determined using analytical scales. All plants were divided into separate organs (shoot system and embryonic radicle) and weighed. The yield of the plant's crude biomass was measured by determining the total weight of the fresh biomass for each geographical area of cultivation. Samples were taken from an area of 1x1 m² in a crop field and their mass has been determined. To determine the percentage of dry matter, individual parts of a plant (shoot system and embryonic radicle) have been carefully crushed, and 5-10 g of samples were collected. These samples were placed in buckets or paper bags and dried in a drying cabinet at a temperature of 105 ° C to a constant weight. The percentage of dry matter in shoot system and embryonic radicle was calculated. The dry biomass of shoot system and embryonic radicle was calculated by multiplying the crude biomass of these plant parts by the percentage of dry matter in them. The total dry biomass of a plant is calculated for each repeat by summing the dry biomass of individual plant parts.

### 2. Results

The treatment of blue lupine seeds with EDP peptide had a positive effect on morphometric parameters in all conditions of the experiment (see Table 1 below).

**Table 1 - Effect of different concentrations of the EDP peptide on morphometric parameters of Ladny variety blue lupine sprouts (mean data for four repetitions ± confidence interval)**

| Conditions | Average length, mm | | Sprouts total weight, g | |
|---|---|---|---|---|
| | Shoot system | Embryonic radicle | Crude | Dry |
| Control | 14.39±0.06 | 34.6±0.06 | 1.25±0.01 | 0.261±0.004 |
| 1*10⁻⁹ g/L | 15.78±0.04* | 37.3±0.04* | 1.3±0.01* | 0.262±0.004 |
| 1*10⁻¹⁰ g/L | 17.45±0.05* | 37.88±0.05* | 1.32±0.01* | 0.266±0.003 |
| 1*10⁻¹¹ g/L | 19.4±0.04* | 38.76±0.06* | 1.38±0.01* | 0.266±0.003 |
| 1*10⁻¹² g/L | 19.52±0.03* | 40.78±0.04* | 1.41±0.01* | 0.32±0.004* |
| 1*10⁻¹³ g/L | 20.56±0.04* | 42.2±0.04* | 1.41±0.01* | 0.355±0.004* |
| 1*10⁻¹⁵ g/L | 20.2±0.03* | 42.99±0.06* | 1.41±0.01* | 0.357±0.004* |
| LSD₀₅ | 0.71 | 1.83 | 0.05 | 0.01 |

| | | | | |
|---|---|---|---|---|
| Remark: * - statistically significant differences at 5% significance level compared to control | | | | |

By the end of the experiment, the best effect was observed in sprouts whose seeds were treated with the peptide with the concentration of 10⁻¹⁵ g/L. The average length of the lupin shoot system and embryonic radicle was 20.2 and 42.9 mm, respectively. In the condition without treatment (control), shoot system length was 14.4 mm and embryonic radicle length were 34.6 mm. The increment is 40 and 24%, respectively.

Crude weight of lupine shoot system in the condition with the concentration of 10⁻¹³ and 10⁻¹⁵ g/L was also the highest, *i.e.* 1.41 g, while in the control this indicator did not exceed 1.25 g. Thus, the increase in relation to the control was 13.7%. In other experimental conditions, this indicator varied from 1.29 to 1.40 g.

The maximum values of the shoot system dry weight - 0.36 g, 39% higher compared to the control (0.26 g) were also observed in the experimental condition with the concentration of 10⁻¹⁵ g/L.

## Claims

1. Use of a peptide consisting of the amino acid sequence EDP, or a salt thereof, as a biostimulant.

2. The use of claim 1, wherein the biostimulant is a root stimulant.

3. The use of claim 1 or 2, wherein the biostimulant is a shoot system stimulant.

4. The use of any of claims 1 to 3, wherein EDP peptide, or a salt thereof, is used to treat a plant from the order Fabales.

5. The use of any of claims 1 to 4, wherein EDP peptide, or a salt thereof, is used to treat seed.

6. The use of any of claims 1 to 4, wherein EDP peptide, or a salt thereof, is used to treat roots of the plant.

7. The use of any of claims 1 to 4, wherein EDP peptide, or a salt thereof, is used to treat the shoot system of the plant.

8. The use of any of claims 1 to 7, wherein EDP peptide, or a salt thereof, is in the form of a powder.

9. The use of any of claims 1 to 7, wherein EDP peptide, or a salt thereof, is in the form of a liquid solution.

10. A composition comprising EDP peptide, or a salt thereof, and a plant protection product.

11. A process for stimulating a plant, comprising the following steps:
a. treating said plant with EDP peptide, or a salt thereof,
b. cultivating said plant.

12. The process of claim 11, wherein the treatment in step a. is carried out on a plant from the order Fabales.

13. The process of claims 11 or 12, wherein the treatment in step a. is carried out on a seed.

14. The process of any of claims 11 to 13, wherein the treatment in step a. comprises a step of applying EDP peptide, or a salt thereof, to the soil.

15. The process of any of claims 11 to 14, wherein the treatment in step a. comprises a step of applying EDP peptide, or a salt thereof, on the shoot system of the plant.
